# EUROPEAN PATENT APPLICATION

(11) **EP 4 067 980 A1**
(43) Date of publication of application: **05.10.2022**
(21) Application number: 20895360.4
(22) Date of filing: 02.12.2020
(51) Int. Cl.: G02B 30/33, H04N 13/10

(54) **FIELD SEQUENTIAL DISPLAY**

(30) Priority: 05.12.2019 CN 201911231379
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133322
(87) International publication number: WO 2021/110029

(57) **Abstract**

The present application relates to the technical field of 3D display, and discloses a field sequential display, comprising a multi-viewpoint 3D display screen, comprising a plurality of composite pixels, wherein each composite pixel in the plurality of composite pixels comprises a plurality of pixels corresponding to a plurality of viewpoints of the field sequential display; a light source device, comprising a plurality of monochromatic light sources; a light source time sequence controller, configured to control turn-on time and turn-off time of the plurality of monochromatic light sources; and a 3D processing device, which is in communication connection with the light source time sequence controller and the multi-viewpoint 3D display screen, and is configured to enable the light source time sequence controller to switch and turn on at least part of monochromatic light sources in the plurality of monochromatic light sources in a time sequence manner, so as to render corresponding pixels in each composite pixel in the multi-viewpoint 3D display screen. Through adoption of the field sequential display, a color filter can be omitted, and the light utilization rate of light sources can be improved.

## Description

The present application claims priority to the Chinese Patent Application with an application number of 2019112313796 and a title of "Field Sequential Display", filed to China National Intellectual Property Administration on December 5th, 2019, the disclosures of which are hereby incorporated by reference.

### Technical Field

The present application relates to the technical field of 3D display, and for example, relates to a field sequential display.

### Background

At present, 3D display equipment made based on the space color mixing principle needs to be equipped with an expensive color filter, and light of light sources is absorbed by the color filter, leading to reduction of light utilization efficiency. Therefore, people try to replace a current display by a field sequential display; however, as a light source device thereof needs to comprise a plurality of high-frequency flash monochromatic light sources, a challenge is put forward for a circuit.

### Summary

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a field sequential display, so as to solve at least part of the technical problems.

In some embodiments, a field sequential display is disclosed, comprising: a multi-viewpoint 3D display screen, comprising a plurality of composite pixels, wherein each composite pixel in the plurality of composite pixels comprises a plurality of pixels corresponding to a plurality of viewpoints of the field sequential display; a light source device, comprising a plurality of monochromatic light sources; a light source time sequence controller, configured to control turn-on time and turn-off time of the plurality of monochromatic light sources; and a 3D processing device, which is in communication connection with the light source time sequence controller and the multi-viewpoint 3D display screen, and is configured to enable the light source time sequence controller to switch and turn on at least part of monochromatic light sources in the plurality of monochromatic light sources in a time sequence manner, so as to render corresponding pixels in each composite pixel in the multi-viewpoint 3D display screen.

In some embodiments, the light source time sequence controller is configured to turn on a light source driving circuit in a time sequence manner based on signals of the 3D processing device, so as to turn on at least part of monochromatic light sources in the plurality of monochromatic light sources.

In some embodiments, the light source time sequence controller is configured to turn on monochromatic light sources required in at least a next time period, which is adjacent to a current time period in terms of time, in advance in a specific time period after monochromatic light sources required in the current time period remain as turning on.

In some embodiments, the light source time sequence controller is configured to, based on circuit response time, turn on monochromatic light sources required in the at least next time period in advance in a specific time period after the monochromatic light sources required in the current time period remain as turning on; wherein the circuit response time refers to time required by monochromatic light sources from being turned on to being lighted.

In some embodiments, the light source time sequence controller is configured to stagger lighting time of the monochromatic light sources required in the current time period and lighting time of the monochromatic light sources required in the at least next time period in terms of time.

In some embodiments, the plurality of monochromatic light sources comprise at least one of red light sources, green light sources and blue light sources.

In some embodiments, the multi-viewpoint 3D display screen comprises: a display panel, comprising the plurality of composite pixels; and a grating, covering the plurality of composite pixels of the display panel; wherein the grating comprises a first lens array and a second lens array, surfaces, away from each other, of the first lens array and the second lens array are planes, and surfaces, facing each other, of the first lens array and the second lens array are concave-convex complementary .

In some embodiments, one lens array in the first lens array and the second lens array is a plano-convex lens array, the other lens array is a plano-concave lens array, and a refractive index of the plano-convex lens array is greater than a refractive index of the plano-concave lens array.

In some embodiments, a field sequential display is disclosed, comprising: a multi-viewpoint 3D display screen, comprising a plurality of composite pixels, wherein each composite pixel in the plurality of composite pixels comprises a plurality of pixels corresponding to a plurality of viewpoints of the field sequential display; a light source device, comprising a plurality of monochromatic light sources, wherein the plurality of monochromatic light sources comprise blue light sources; and a blue light selective filtration device, arranged at a light output side of the blue light sources, and configured to filter blue light selectively.

In some embodiments, the blue light selective filtration device is configured to filter blue light with wavelength close to ultraviolet wavelength.

In some embodiments, the blue light selective filtration device is configured as a narrow-band light filtration cover allowing blue light with wavelength greater than or equal to 440nm to pass through.

Blue light is light harmful to eyes, but the blue light is primary-color light and is indispensable for color display. The part, most harmful to the eyes, of the blue light is a wavelength band with wavelength close to the ultraviolet wavelength, and for example, the wavelength is shorter than 440nm.

The field sequential displays provided by the embodiments of the present disclosure may realize the following technical effects:
a color filter is omitted, and the light utilization rate of light sources is improved.

The above overall description and the description hereinafter are only exemplary and explanatory and are not used for limiting the present application.

### Description of Drawings

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1 is a schematic diagram of an internal architecture of a field sequential display according to embodiments of the present disclosure;
Fig. 2 is a schematic diagram of a position relation between a light source device and a multi-viewpoint 3D display screen according to the embodiments of the present disclosure;
Fig. 3 is a schematic diagram of a light source device according to the embodiments of the present disclosure;
Fig. 4 is a contrastive schematic diagram of effects on display in different manners, caused by circuit response time, according to the embodiments of the present disclosure;
Fig. 5 is a principle schematic diagram of driving corresponding pixels in composite pixels according to the embodiments of the present disclosure;
Fig. 6 is a structural schematic diagram of a multi-viewpoint 3D display screen according to the embodiments of the present disclosure;
Fig. 7 is a structural schematic diagram of a lenticular optical composite film according to the embodiments of the present disclosure;
Fig. 8 shows a structural schematic diagram of a lenticular grating according to the embodiments of the present disclosure in a form of a sectional view;
Fig. 9 shows a structural schematic diagram of another lenticular grating according to the embodiments of the present disclosure in a form of a sectional view;
Fig. 10 is a schematic diagram of setting a blue light selective filtration device in the field sequential display according to the embodiments of the present disclosure; and
Fig. 11 is a flow chart of a display control method of a field sequential display according to the embodiments of the present disclosure.

Reference numerals:
1: lenticular optical composite film; 11: lenticular grating; 111: lining; 112: plano-convex cylinder lens array; 1121: plano-convex cylinder lens; 113: plano-concave cylinder lens array; 1131: plano-concave cylinder lens; 114: lining; 115: adhesive layer; 12: polarizer; 13: release film; 2: display panel layer; 21: substrate; 22: substrate; 23: display screen driving circuit; 25: liquid crystal layer; 26: polarizer; 110: multi-viewpoint 3D display screen; 130: 3D processing device; 140: light source driving device; 141: light source time sequence controller; 142: light source driving circuit; 150: display screen driving device; 151: display screen time sequence controller; 1511: row driver; 1512: column driver; 200: composite pixel; 210: sub-pixel; 300: light source device; 310: light source group; 320: local light-emitting zone; 310R: red light source; 310G: green light source; 310B: blue light source; and 400: blue light selective filtration device.

### Detailed Description

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

According to the embodiments of the present disclosure, a field sequential display is provided, and is used for displaying multi-viewpoint 3D images. The field sequential display comprises a multi-viewpoint 3D display screen (such as: a multi-viewpoint naked eye 3D display screen), a light source device, a light source time sequence controller and a 3D processing device. The multi-viewpoint 3D display screen may comprise a plurality of composite pixels, wherein each composite pixel comprises a plurality of pixels. The quantity of the pixels contained in each composite pixel corresponds to that of viewpoints of the field sequential display. In some embodiments, the one-to-one corresponding relation exists between the pixels contained in each composite pixel and the viewpoints of the field sequential display.

The light source device may be located at the back side of the multi-viewpoint 3D display screen and is used for providing colored lights for the multi-viewpoint 3D display screen, so as to render corresponding pixels of each composite pixel in the multi-viewpoint 3D display screen. The light source device may comprise a plurality of monochromatic light sources; and the plurality of monochromatic light sources may comprise different colors of monochromatic light sources. For example, the monochromatic light sources comprise red light sources (R light sources), green light sources (G light sources) and blue light sources (B light sources) and may form R-G-B light-emitting sequences or R-G-B-B-G-R light-emitting sequences. Or, for example, the monochromatic light sources comprise red light sources (R light sources), blue light sources (B light sources) and yellow light sources (Y light sources) and may form R-Y-Y-B light-emitting sequences. Or, for example, the monochromatic light sources comprise red light sources (R light sources), green light sources (G light sources), blue light sources (B light sources), yellow light sources (Y light sources) and cyan light sources (C light sources) and may form R-G-B-Y-C light-emitting sequences. In addition, those skilled in the art may further list other colors of monochromatic light sources and light-emitting sequences, which are not repeated here. In some embodiments, the light source device comprises compensatory light sources, such as orange light sources or white light sources.

The light source time sequence controller is configured to control the turn-on time and the turn-off time of at least part of monochromatic light sources in the light source device. For example, in the R-G-B light-emitting sequences, the light source time sequence controller is configured to turn on the R light sources, the G light sources and the B light sources sequentially according to the time sequence. By utilizing the characteristic that eyes cannot distinguish a single color switched fast, based on the color combination effect in the time direction (i.e., based on the additive color mixture of the time), monochromatic lights emitted by different colors of monochromatic light sources can be mixed in the eyes, so as to display color 3D images. Under the condition that the compensatory light sources exist, the light source time sequence controller is further configured to control the turn-on time and the turn-off time of the compensatory light sources.

The 3D processing device is in communication connection with the light source time sequence controller and the multi-viewpoint 3D display screen respectively and is configured to send a light source driving signal and a display screen driving signal respectively, so that the light source time sequence controller can switch and turn on the monochromatic light sources required in each time period in a time sequence manner, so as to render the corresponding pixels in each composite pixel in the multi-viewpoint 3D display screen.

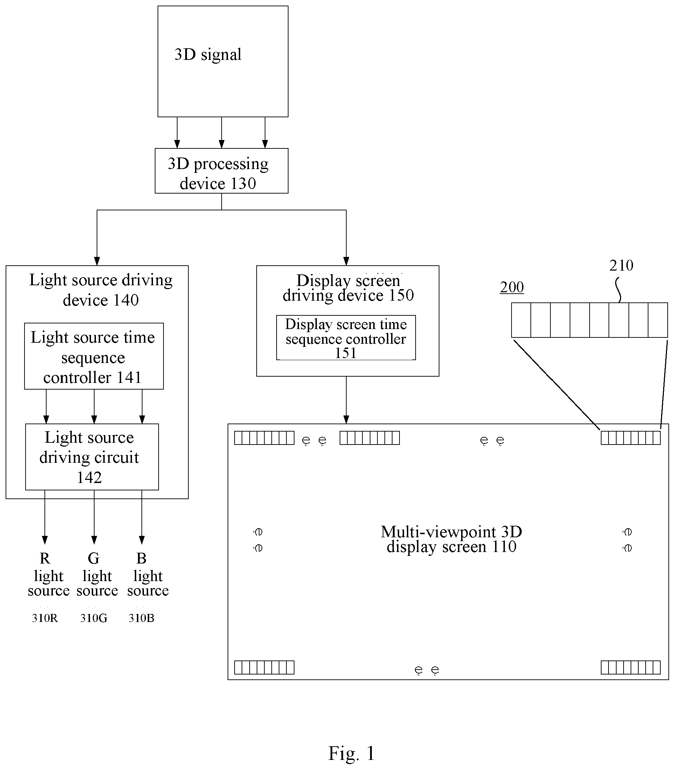

Fig. 1 exemplarily shows a schematic diagram of an internal architecture of a field sequential display. As shown in Fig. 1, a 3D processing device 130 is in communication connection to a light source driving device 140 and a display screen driving device 150 respectively. The light source driving device 140 comprises a light source time sequence controller 141 and a light source driving circuit 142 controlled by the light source time sequence controller 141, the light source time sequence controller 141 is configured to turn on the light source driving circuit 142 according to a light source driving signal sent by the 3D processing device, and different colors of monochromatic light sources in a light source device are turned on and lighted sequentially according to the time sequence. In the shown embodiment, the monochromatic light sources comprise R light sources 310R, G light sources 310G and B light sources 310B. The display screen driving device 150 comprises a display screen time sequence controller 151, and the display screen time sequence controller 151 is configured to control corresponding pixels 210 in composite pixels 200 of a multi-viewpoint 3D display screen 110 for image display according to a display screen driving signal sent by the 3D processing device 130.

As shown in Fig, 2, the light source device may be arranged at the back side of the multi-viewpoint 3D display screen 110 and is used for lighting the backlight of the multi-viewpoint 3D display screen 110. The light source device may be provided with a plurality of light sources composed of light-emitting components, such as red light sources 310R, green light sources 310G and blue light sources 310B. For example, the light-emitting components may be Light-Emitting Diodes (LEDs).

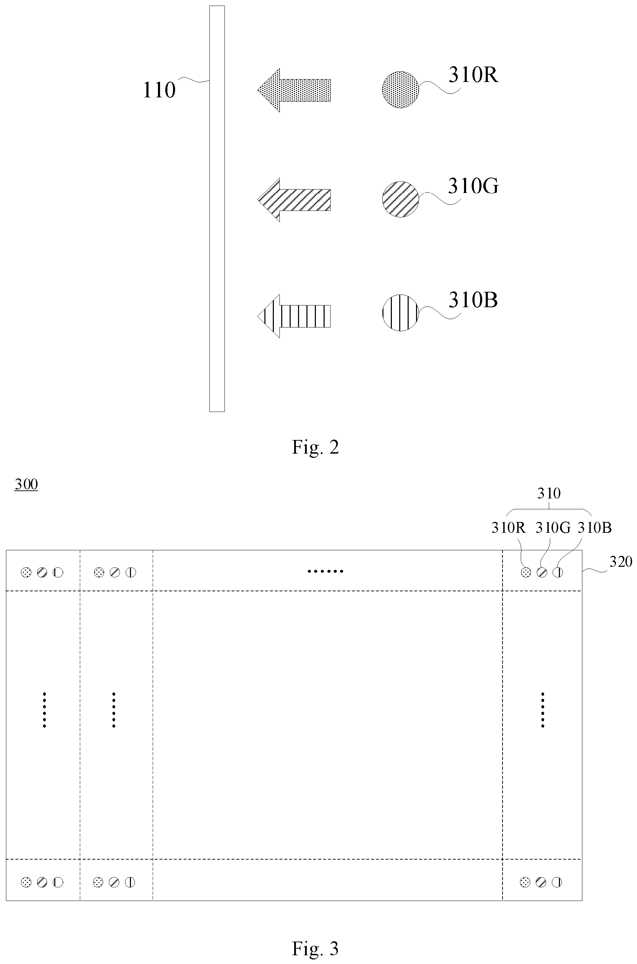

Fig. 3 exemplarily shows a light source device 300. As shown in Fig. 3, the light source device 300 is provided with a plurality of light source groups 310 arranged in an array form, and each light source group 310 comprises an R light source 310R, a G light source 310G and a B light source 310B. For example, the plurality of light source groups 310 may be arranged in the light source device 300 in a form of m columns and n rows (m×n array), and therefore, local light-emitting zones 320 of the m×n array of the light source device 300 are formed, wherein each light source group 310 corresponds to one local light-emitting zone 320. Under the control of the 3D processing device 130 and the light source driving device 140, independent turn-on and turn-off operations are executed on each light source group 310 of the light source device 300 according to input 3D signals (3D video signals), so that the brightness and the chroma of the backlight may be locally adjusted according to a to-be-displayed 3D video. The figure only shows an example that each light source group 310 comprises the R light source 310R, the G light source 310G and the B light source 310B that are composed of the single light-emitting components, but those skilled in the art will understand that the varieties of colors of monochromatic light sources in each light source group 310 and the quantity of the light-emitting components forming the monochromatic light sources may be adjusted according to actual requirements, and for example, the monochromatic light sources in each light source group 310 may be composed of two or more light-emitting components.

Under the control of the light source driving circuit 142, each light source group 310 can emit primary-color lights by independent turning on and light emitting (lighting) of the R light source 310R, the G light source 310G and the B light source 310B. As the lights emitted by each light source group 310 form the local light-emitting zone 320, the light source device 300 may be configured to execute color display at the resolution lower than the resolution of the composite pixels of the multi-viewpoint 3D display screen 110. In some embodiments, the light source groups 310 of the m×n array of the light source device 300 are contrasted with the composite pixels of an x×y array (comprising x columns and y rows) of the multi-viewpoint 3D display screen 110, m≤x, and n≤y.

Continuing to refer to Fig. 1, the 3D video signals (the 3D signals) comprising R, G and B image signals are input into the 3D processing device 130, and the 3D processing device is configured to perform various signal processing operations for the 3D signals, control the turning on of the monochromatic light sources of the light source device 300 and control the display of the multi-viewpoint 3D display screen 110. According to a field sequential display mode, different monochromatic light sources are turned on sequentially in one frame of image in a time sharing manner synchronously with the display driving of the multi-viewpoint 3D display screen, so as to render the corresponding pixels in the composite pixels to execute color display. By adopting the field sequential display mode, a color filter, which is high in cost and reduces the light utilization rate, may be omitted.

The 'frame' here refers to an image unit of the 3D video. One image corresponds to one frame, and the 3D video is composed of a plurality of frames of images. In one frame of image, a color image formed by the composite pixels rendered based on the monochromatic light sources is called as a 'sub-frame', and each frame of image is composed of a plurality of sub-frames. The sub-frames are superposed in terms of time and are combined on retinas of the eyes, so as to reconstruct (reproduce) a frame of image.

The 3D processing device 130 may be provided with a computation circuit and a memory, so as to perform processing for the 3D signals and store a processing result. For example, the computation circuit may be configured to execute optical linearization, execute separation processing for color components, compensation components and primary-color components, execute the comparison for the brightness or the chroma among all the light-emitting zones of the light source device 300, execute switching control for the sub-frames and so on. The 3D processing device 130 is configured to provide the processing result serving as a driving signal to the light source driving device 140 and the display screen driving device 150 respectively. In some embodiments, the 3D processing device 130 may have a resolution conversion and computation function or module, so as to cope with the 3D signals, the light source device and the multi-viewpoint 3D display screen with respective different resolutions.

The light source driving device 140 may be configured to drive LED light sources by utilizing a pulse signal based on the light source driving signal of the 3D processing device 130. As described above, each frame of image is divided into a plurality of sub-frames that are arranged sequentially on a time axis and are switched fast, and the light source time sequence controller 141 needs to control the light source device 300 to synchronously switch and light the monochromatic light sources required in each time period. For the field sequential display, the fast switching and lighting for the monochromatic light sources is favorable for the display effect. However, based on the existence of circuit response time, the monochromatic light sources need certain time (specific time) from being turned on to being lighted, and the time is usually calculated by ms. The switching speed of the sub-frames is affected by the accumulation of the circuit response time for lighting all the monochromatic light sources, the color breaking is easily caused, and the display effect of the field sequential display is destroyed.

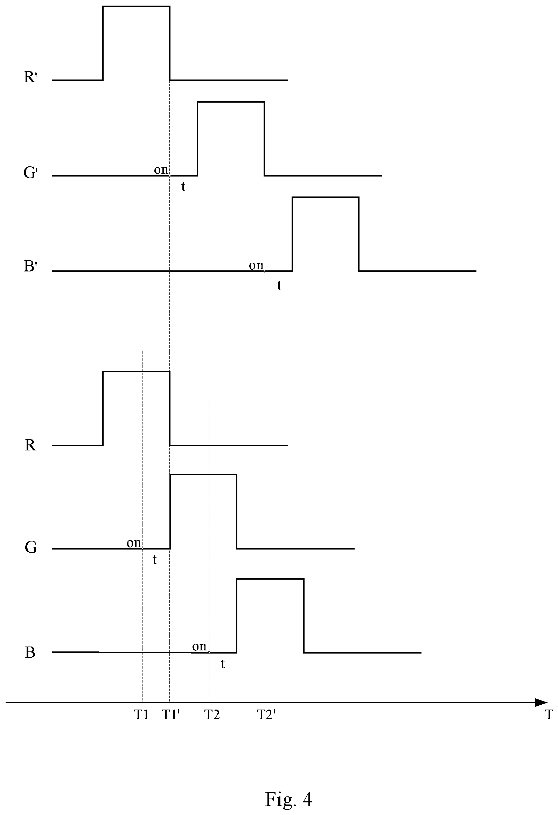

In Fig. 4, the upper half part shows the effect on the switching speed and the lighting speed of the monochromatic light sources, caused by the circuit response time, and the high flat part is the lighting time of the monochromatic light sources. As shown in the figure, monochromatic light sources R', G' and B' are turned on sequentially on a time axis T. When a red light source R' goes out at the time point T1', a green light source G' is turned on. Due to the existence of the circuit response time t, the green light source G' is lighted at the time point of T1'+t actually. Similarly, when the green light source G' goes out at the time point of T2', and a blue light source B' is turned on, due to the existence of the circuit response time t, the blue light source B' is lighted at the time point of T2'+t actually. It may be clearly understood from Fig. 4 that the circuit response time causes the effect on the fast switching of the time sequence of the monochromatic light sources, while eliminating the effect is favorable for improvement of the display effect of the field sequential display.

Continuing to refer to Fig. 4, the lower half part shows an example of eliminating the effect caused by the circuit response time. Based on the circuit response time, the light source time sequence controller is configured to turn on monochromatic light sources required in at least a next time period, which is adjacent to a current time period in terms of time, in advance in a specific time period after monochromatic light sources required in the current time period remain as turning on. As shown in the figure, a red light source R goes out at the time point of T1', while at the time point T obtained by moving the circuit response time t backwards along the time axis T from T1', a green light source G required in the next time period is turned on. In other words, at the time point: T1=T1'-t, the green light source G required in the next time period is turned on. Similarly, the turn-on time T2 of a blue light source B adjacent to the green light source G in terms of time is also obtained by moving the circuit response time t backwards along the time axis T from the time point that the green light source G goes out. Fig. 4 also clearly shows the favorable result generated by eliminating the effect of the circuit response time by adopting the means, namely, the switching speed and the lighting speed of the monochromatic light sources are greatly improved, and correspondingly, the switching speed of all sub-frames in one frame of image may also be effectively improved, so that a user may see a 3D display effect which is more continuous, smoother and more colorful.

In some embodiments, the light source time sequence controller is configured to stagger the lighting time of the monochromatic light sources required in the current time period and the lighting time of the monochromatic light sources required in the at least next time period in terms of time.

In the embodiments of the present disclosure, the specific time in which the monochromatic light sources required in the current time period remain as turning on meets the condition: the specific time is not superposed, crossed or conflicted with the lighting time of the monochromatic light sources required in the next time period.

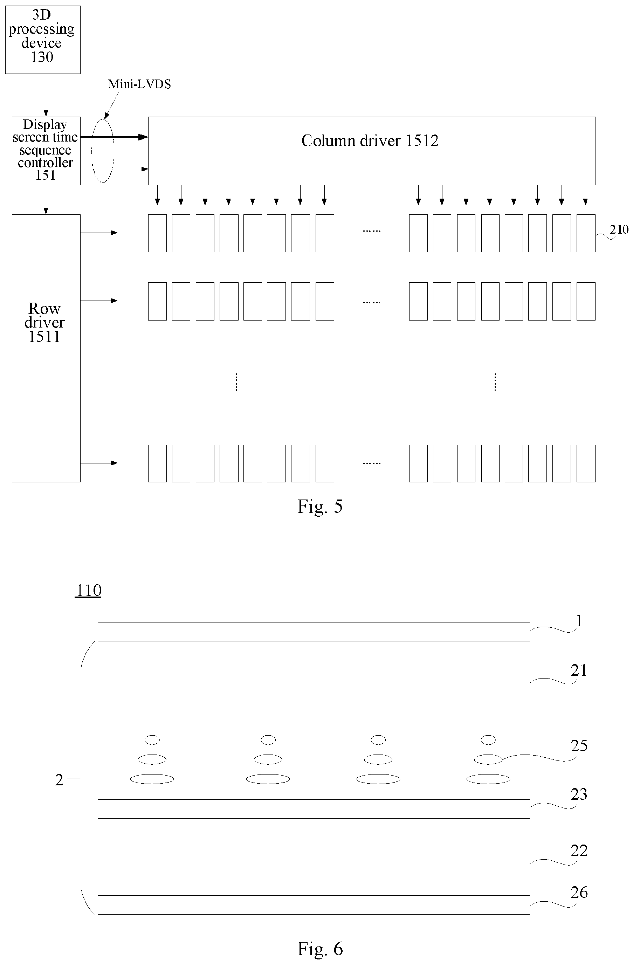

Continuing to refer to Fig. 1, the display screen driving device 150 is configured to drive the composite pixels 200 of the multi-viewpoint 3D display screen 110 based on the display screen driving signal of the 3D processing device 130. In some embodiments, the display screen driving device 150 comprises a row driver, a column driver and the light source time sequence controller for connecting the row driver and the column driver. Fig. 5 shows a schematic diagram of controlling the display screen driving device to drive the corresponding pixels 210 in the composite pixels 200 of the multi-viewpoint 3D display screen by the 3D processing device. As shown in the figure, the 3D processing device 130 is in communication connection to the display screen time sequence controller 151 and is configured to send the display screen driving signal. Based on the display screen driving signal, the display screen time sequence controller 151 is configured to control a row driver 1511 and a column driver 1512 to respectively execute processes of row scanning and column scanning.

Exemplarily, the corresponding pixels in the composite pixels of the x columns and the y rows of the multi-viewpoint 3D display screen 110 are written in by adopting an addressing scheme. For example, for driving zones that can be covered by the row driver 1511 and the column driver 1512, the pixels 210 in the whole row of composite pixels 200 in the zones are updated simultaneously by the column driver 1512, and are updated sequentially from a first row to a last row, and so forth. The display screen time sequence controller 151 is configured to look for 3D video data for a whole row of composite sub-pixels in one row cycle, and for example, the 3D video data that is looked for comprises address information data, related to the viewpoints, of the pixels in the whole row of composite pixels and intensity information data of the pixels contained in each composite pixel in the whole row. The display screen time sequence controller 151 is configured to acquire the 3D video data from the 3D processing device 130, distribute the intensity information data to the column driver 1512 and simultaneously send the address information data to the row driver 1511 to perform addressing for the whole row of composite pixels and the pixels contained in the whole row of composite pixels. In an embodiment shown in Fig. 5, the display screen time sequence controller 151 is exemplarily connected with the column driver 1512 by a Mini-LVDS interface.

For example, the multi-viewpoint 3D display screen may be an LCD (Liquid Crystal Display) screen. Fig. 6 exemplarily shows a multi-viewpoint 3D display screen 110 in a form of the LCD screen. The multi-viewpoint 3D display screen 110 comprises a display panel layer 2 and a lenticular optical composite film 1 attached to the display panel layer 2. The display panel layer 2 comprises a pair of substrates 21 and 22 that are separated from each other, and a liquid crystal layer 25 is arranged in the interval between the two substrates 21 and 22. For example, the substrates 21 and 22 may be glass substrates. A liquid crystal material may be directly filled between the pair of substrates 21 and 22 to form the liquid crystal layer 25. A blocking piece may be arranged between the substrates 21 and 22 to prevent the liquid crystal layer 25 from being exposed out from the periphery of the substrates 21 and 22. Or, the liquid crystal material may be filled in a cladding material in advance to form a liquid crystal package, and then the liquid crystal package is packed between the substrates 21 and 22 to form the liquid crystal layer 25. An electrode (comprising a public electrode and a pixel electrode, which are not shown) is attached to the surface, facing to the substrate 22, of the substrate 21, while the lenticular optical composite film 1 is attached to the surface, back to the substrate 22, of the substrate 21. A display screen driving circuit 23 is attached to the surface, facing to the substrate 21, of the substrate 22, while another polarizer 26 is attached to the surface, back to the substrate 21, of the substrate 22. When current passes through the display screen driving circuit 23 to generate the change of the electric field, the deflection of liquid crystal molecules in the liquid crystal layer 25 is caused, so as to change the deflection polarity of rays. The light source device may be arranged at one side, back to the substrate 21, of the substrate 22.

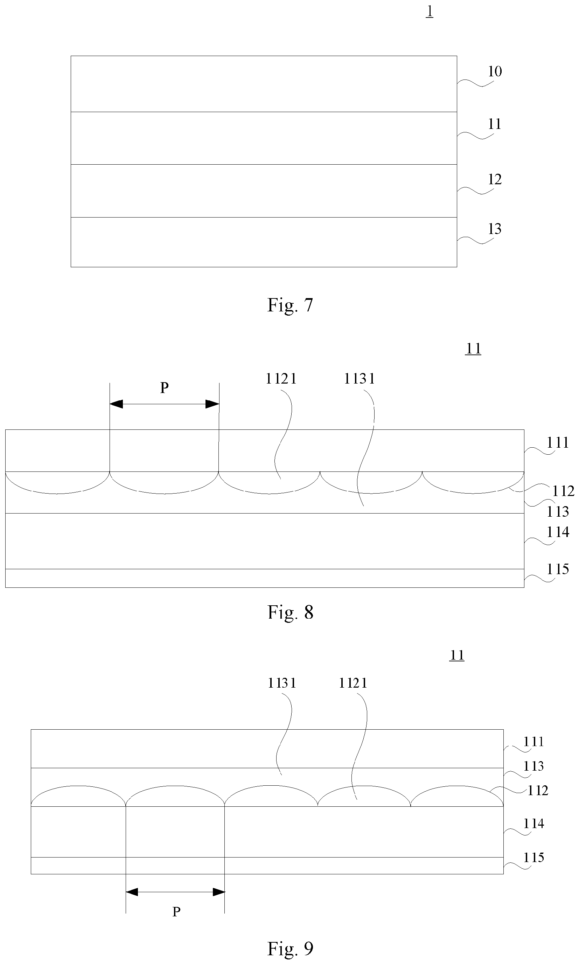

The lenticular optical composite film 1 is attached to the surface of the display panel layer 2 and is used for modulating rays emitted from the display panel layer 2 to generate the light and shade contrast and a plurality of viewpoints, so as to provide the vivid 3D visual effect. Fig. 7 shows a structural schematic diagram of the lenticular optical composite film 1 provided according to the embodiments of the present disclosure, wherein the lenticular optical composite film 1 exists in a state of an independent product that is not assembled with the display panel layer 2. In a shown embodiment, a lenticular grating 11 and a polarizer 12 of the lenticular optical composite film 1 are attached to each other, and may be adhered to each other in an attachment manner of adopting an adhesive, such as a pressure-sensitive adhesive. In order that the lenticular optical composite film 1 is stored and transported conveniently, a protective film 10 is attached to the surface, back to the polarizer 12, of the lenticular grating 11. A release film 13 may be further attached to the surface, back to the lenticular grating 11, of the polarizer 12. The release film 13 may be adhered to the polarizer 12 by an adhesive with the thickness of 0.10mm, so that the thickness of the lenticular optical composite film is hardly affected. The pressure-sensitive adhesive may be selected as the adhesive. When the lenticular optical composite film 1 is attached to the display panel layer 2, the release film 13 is torn down to expose the adhesive, and then the lenticular optical composite film 1 is adhered to the substrate 21 of the display panel layer 2.

The lenticular grating 11 in the lenticular optical composite film 1, serving as a light output directional element, can be used for refracting rays to different directions. Fig. 8 shows a structural schematic diagram of the lenticular grating 11 provided according to the embodiments of the present disclosure in a form of a sectional view. In a shown embodiment, a plano-convex cylinder lens array 112 and a plano-concave cylinder lens array 113 of the lenticular grating 11 are combined to form a non-edge cylinder lens array. The outer surface of the non-edge cylinder lens array (i.e. the surface of the plano-convex cylinder lens array 112 and the surface of the plano-concave cylinder lens array 113 that are back to back) is the flat surface. With reference to Fig. 8, one side of the plano-convex cylinder lens array 112 is a plane, while the other side thereof is composed of a plurality of convex camber surfaces; and one side of the plano-concave cylinder lens array 113 is a plane, while the other side thereof is composed of a plurality of concave camber surfaces. The concave camber surfaces of the plano-concave cylinder lens array 113 and the convex camber surfaces of the plano-convex cylinder lens array 112 are attached to each other complementarily. The plano-convex cylinder lens array 112 may be regarded as being formed by combining a plurality of plano-convex cylinder lenses 1121 arranged side by side, each plano-convex cylinder lens 1121 has a longitudinal axis, and the longitudinal axes of the plano-convex cylinder lenses 1121 are parallel to each other. The plano-concave cylinder lens array 113 may be regarded as being formed by combining a plurality of plano-concave cylinder lenses 1131 arranged side by side, and longitudinal axes of the plano-concave cylinder lenses 1131 are parallel to each other. Fig. 8 shows a plano-convex cylinder lens array 112 composed of five plano-convex cylinder lenses 1121, and a plano-concave cylinder lens array 113 composed of five plano-concave cylinder lenses 1131, but the specific quantity may be increased or decreased according to the situation.

The plano-convex cylinder lens array 112 and the plano-concave cylinder lens array 113 have difference in the refractive index. The difference may be less than the refractive index difference between a conventional lens and air. In the embodiments provided by the present disclosure, the refractive index n1 of the plano-convex cylinder lens array 112 is greater than the refractive index n2 of the plano-concave cylinder lens array 113. Optionally, the refractive index difference n△ between the plano-convex cylinder lens array 112 and the plano-concave cylinder lens array 113 may be about 0.1-0.3, and for example, the refractive index difference n△ may be about 0.15-0.25 or about 0.2. Optionally, the refractive index n1 of the plano-convex cylinder lens array 112 may be about 1.56-1.66, and for example, the refractive index n1 may be about 1.61. Optionally, the refractive index n2 of the plano-concave cylinder lens array 113 is about 1.36-1.46, and for example, the refractive index n2 is about 1.41. The plano-convex cylinder lens array 112 and the plano-concave cylinder lens array 113 are directly attached to each other in a convex-concave complementation manner, and no air exists between the plano-convex cylinder lens array 112 and the plano-concave cylinder lens array 113, so as to avoid the generation of the adverse effect on the light output of the lenticular grating due to the greater refractive index difference between air and each cylinder lens array. The crosstalk of the light output may be reduced due to the smaller refractive index difference between the two attached cylinder lens arrays, and the dependence of the user on the viewing angle can be reduced when the user views a 3D image, so as to generate the greater degree of use freedom. The cylinder lens arrays further have smaller reflectance, so that the viewed images have less interference.

Continuing to refer to Fig. 8, through combination with the pitch P of the cylinder lenses of the plano-convex cylinder lens array 112 in the lenticular grating 11, the expected effect may be further optimized. As shown in Fig. 8, the pitch P of the cylinder lenses is the width, which is measured in the curvature direction, of each plano-convex cylinder lens 1121, and the pitch P of the cylinder lenses is obtained by measuring along the direction vertical to the longitudinal axis of the plano-convex cylinder lens 1121. In the multi-viewpoint 3D display screen, one plano-convex cylinder lens 1121 may cover a plurality of composite pixels or pixels. The plano-convex cylinder lenses are combined with the composite pixels or the pixels to form a plurality of viewpoints, such as four viewpoints, five viewpoints or six viewpoints. The pitch P of the cylinder lenses may be 123.000-125.000µm and for example, the pitch P is 123.500-124.500µm or for example is 124.432µm.

The plano-convex cylinder lens array 112 in the lenticular grating 11 may be oriented relatively to the rows or the columns of the pixels, and for example, the longitudinal axis of any plano-convex cylinder lens 1121 in the plano-convex cylinder lens array 112 may be inclined by a certain angle relatively to the direction of the pixels. Optionally, the inclination angle is about 5 degrees-45 degrees, and for example, is about 10 degrees-40 degrees, or is, for example, about 15 degrees-35 degrees, or is, for example, about 20 degrees-30 degrees, or for example may be 25 degrees. The inclination provides help for decrease of moire patterns.

The plano-convex cylinder lens array 112 and the plano-concave cylinder lens array 113 may be made of same or different materials, and the selected materials may be one or any combination of the following materials: an acrylic resin material, a polymer material such as a polycarbonate material or a polyurethane material, an organic silica gel material, an unsaturated polyester material, an epoxy resin material or other appropriate transparent materials. Fig. 4 shows that linings 111 and 114 are attached to the outer surface of the non-edge cylinder lens array, and an adhesive layer 115 such as the pressure-sensitive adhesive is applied to the lining 114 far away from the plano-convex cylinder lens array 112 with the high refractive index to joint the polarizer 12. The linings 111 and 114 may be made of a thermoplastic polyester material, and for example, the linings 111 and 114 are made of a Polyethylene Terephthalate (PET) material. The thickness of the linings 111 and 114 is about 0.1mm, so as to reduce the overall thickness of the lenticular optical composite film as far as possible. Under the condition that the non-edge cylinder lens array composed of the plano-convex cylinder lens array 112 and the plano-concave cylinder lens array 113 is solid enough, at least one of the linings 111 and 114 may be omitted.

The plano-convex cylinder lens array 112 and the plano-concave cylinder lens array 113 that are involved in the embodiments of the present disclosure may be cylinder lenses that cannot be switched, namely, the plano-convex cylinder lens array 112 and the plano-concave cylinder lens array 113 respectively have fixed optical properties. Therefore, in any case, the plano-convex cylinder lens array 112 and the plano-concave cylinder lens array 113 are always in a lens mode.

Fig. 9 shows a structural schematic diagram of another lenticular grating 11 provided according to the embodiments of the present disclosure in a form of a sectional view. The difference between the lenticular grating 11 in Fig. 9 and the lenticular grating 11 in Fig. 8 is that in the lenticular grating in Fig. 9, the polarizer 12 is attached to the lenticular grating 11 and is closer to the plano-convex cylinder lens array 112 than to the plano-concave cylinder lens array 113. The respective refractive indexes of the plano-convex cylinder lens array 112 and the plano-concave cylinder lens array 113 and the refractive index difference between the plano-convex cylinder lens array 112 and the plano-concave cylinder lens array 113 may refer to an embodiment shown in Fig. 8.

In the above mentioned cylinder lens arrays, the plano-convex cylinder lenses of the plano-convex cylinder lens array and the plano-concave cylinder lenses of the plano-concave cylinder lens array are cylinder lenses, each of which has one axis. Besides, other lenses, each of which has two intersected axes (such as two perpendicularly intersected axes), are also suitable. In the case, a plurality of plano-concave cylinder lenses, each of which has two intersected axes, form a plano-concave cylinder lens array; a plurality of plano-convex cylinder lenses, each of which has two intersected axes, form the plano-convex cylinder lens array; the plano-convex cylinder lens array and the plano-concave cylinder lens array are attached to each other in a concave-convex complementation manner to form a non-edge cylinder lens array; and the refractive index of the plano-convex cylinder lens array is greater than that of the plano-concave cylinder lens array. The polarizer is attached to the lenticular grating, to form the lenticular optical composite film. In some embodiments, the grating may comprise a spherical lens and a concave lens that is in concave-convex complementation with the spherical lens. The refractive index of the spherical lens is different from that of the concave lens. Here, the spherical lens may also be replaced by a cross-section spherical lens.

According to the embodiments of the present disclosure, a display and components thereof are reconstructed based on 3D display, and components originally belonging to a conventional 2D display are combined with a grating material, so that the overall manufacturing technique is simplified, and the process cost is greatly lowered. In the original 3D display, a polarizer and a grating realize aligning attachment to display components in respective different processes, and the grating is usually made into a soft body, so that the difficulty of aligning attachment is increased. In the present application, the polarizer and the lenticular grating are combined with each other and are combined and machined with the independence of a display panel, the polarizer does not need to be in alignment with the lenticular grating, and the polarizer and the lenticular grating may be attached onto a display panel at one time, so that the process is saved. Additionally, the hardness of the lenticular grating is increased due to the combination of the polarizer and the lenticular grating, so as to be favorable for aligning attachment. The lenticular optical composite film of the present application is utilized, and additional auxiliary alignment tools such as an alignment mark, a base plate and the like are not needed, so that the difficulty of the technique is lowered. The surfaces, facing outwards, of the two cylinder lens arrays in the lenticular grating are planes, so that the surfaces of the two cylinder lens arrays are easy to clean and easy to install and attach with the help of an auxiliary installation tool such as a sucking disk.

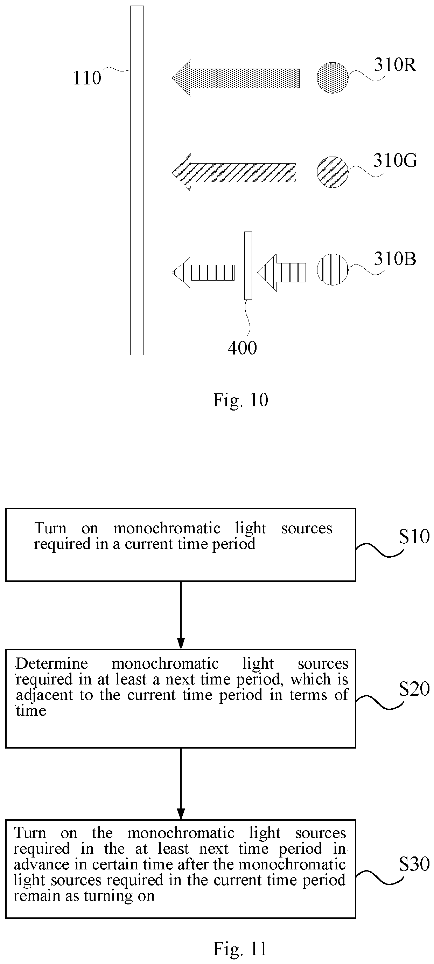

In some embodiments, the light source device comprises blue light sources and a blue light selective filtration device arranged at a light output side of the blue light sources. Fig. 10 shows a schematic diagram of setting a blue light selective filtration device 400 in the field sequential display. As shown in the figure, the blue light selective filtration device 400 is arranged at the downstream position of a light-emitting path of a blue light source 310B and is configured to filter blue light emitted by the blue light source 310B, so as to avoid the harm of the blue light within the harmful wavelength scope to the user. With the consideration that the wavelength scope harmful to human in the blue light is close to ultraviolet wavelength, the blue light selective filtration device 400 may be correspondingly configured to filter blue light close to the ultraviolet wavelength.

In some embodiments, the blue light selective filtration device is configured as a narrow-band light filtration cover forbidding blue light with the wavelength less than the certain wavelength, such as 450nm, 445nm and 440nm, to pass through and allowing blue light with the wavelength greater than or equal to the certain wavelength, such as 450nm, 445nm and 440nm, to pass through, so as to filter out blue light with the wavelength less than the certain value. The narrow-band light filtration cover may be sleeved on the blue light sources.

According to the embodiments of the present disclosure, a display control method of the field sequential display is provided. As shown in Fig. 11, the display control method comprises:
S10, turning on monochromatic light sources required in a current time period;
S20, determining monochromatic light sources required in at least a next time period, which is adjacent to the current time period in terms of time; and
S30, turning on the monochromatic light sources required in the at least next time period in advance in certain time after the monochromatic light sources required in the current time period remain as turning on.

The above display control method may be completed by the light source time sequence controller.

In some embodiments, the step of turning on the monochromatic light sources required in the at least next time period in advance comprises: determining circuit response time; and based on the circuit response time, turning on the monochromatic light sources required in the at least next time period in advance in certain time after the monochromatic light sources required in the current time period remain as turning on, wherein the circuit response time refers to time required by monochromatic light sources from being turned on to being lighted.

In some embodiments, the display control method further comprises staggering lighting time of the monochromatic light sources required in the current time period and lighting time of the monochromatic light sources required in the at least next time period in terms of time.

The above description and drawings sufficiently illustrate the embodiments of the present disclosure to enable those skilled in the art to practice them. Other embodiments may comprise structural, logical, electrical, process, and other changes. Unless expressly required, individual components and functions are optional and the order of operations may be changed. Parts and features of some embodiments may be included in or substituted for parts and features of other embodiments. The scope of the embodiments of the present disclosure includes the full scope of the claims, and all available equivalents of the claims. The terms used in the present application are used to describe the embodiments only and not to limit the claims. When used in the present application, the terms "comprising" and the like refer to the presence of at least one of the stated features, but do not exclude the presence of other features.

Those skilled in the art may recognize that the units and algorithm steps of each example described in conjunction with the embodiments disclosed herein can be implemented in electronic hardware, or a combination of computer software and electronic hardware. Those skilled in the art may use different methods for implementing the described functions for each particular application, but such implementations should not be considered beyond the scope of the embodiments of the present disclosure.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. Afield sequential display, comprising:
a multi-viewpoint 3D display screen, comprising a plurality of composite pixels, wherein each composite pixel in the plurality of composite pixels comprises a plurality of pixels corresponding to a plurality of viewpoints of the field sequential display;
a light source device, comprising a plurality of monochromatic light sources;
a light source time sequence controller, configured to control turn-on time and turn-off time of the plurality of monochromatic light sources; and
a 3D processing device, which is in communication connection with the light source time sequence controller and the multi-viewpoint 3D display screen, and is configured to enable the light source time sequence controller to switch and turn on at least part of monochromatic light sources in the plurality of monochromatic light sources in a time sequence manner, so as to render corresponding pixels in each composite pixel in the multi-viewpoint 3D display screen.

2. The field sequential display according to claim 1, wherein the light source time sequence controller is configured to turn on a light source driving circuit in a time sequence manner based on signals of the 3D processing device, so as to turn on at least part of monochromatic light sources in the plurality of monochromatic light sources.

3. The field sequential display according to claim 2, wherein the light source time sequence controller is configured to turn on monochromatic light sources required in at least a next time period, which is adjacent to a current time period in terms of time, in advance in a specific time period after monochromatic light sources required in the current time period remain as turning on.

4. The field sequential display according to claim 3, wherein the light source time sequence controller is configured to, based on circuit response time, turn on monochromatic light sources required in the at least next time period in advance in a specific time period after the monochromatic light sources required in the current time period remain as turning on;
wherein the circuit response time refers to time required by monochromatic light sources from being turned on to being lighted.

5. The field sequential display according to claim 3, wherein the light source time sequence controller is configured to stagger lighting time of monochromatic light sources required in the current time period and lighting time of monochromatic light sources required in the at least next time period in terms of time.

6. The field sequential display according to any one of claims 1-5, wherein the plurality of monochromatic light sources comprise at least one of red light sources, green light sources and blue light sources.

7. The field sequential display according to any one of claims 1-5, wherein the multi-viewpoint 3D display screen comprises:
a display panel, comprising the plurality of composite pixels; and
a grating, covering the plurality of composite pixels of the display panel;
wherein the grating comprises a first lens array and a second lens array, surfaces, away from each other, of the first lens array and the second lens array are planes, and surfaces, facing each other, of the first lens array and the second lens array are concave-convex complementary.

8. The field sequential display according to claim 7, wherein one lens array in the first lens array and the second lens array is a plano-convex lens array, the other lens array is a plano-concave lens array, and a refractive index of the plano-convex lens array is greater than a refractive index of the plano-concave lens array.

9. Afield sequential display, comprising:
a multi-viewpoint 3D display screen, comprising a plurality of composite pixels, wherein each composite pixel in the plurality of composite pixels comprises a plurality of pixels corresponding to a plurality of viewpoints of the field sequential display;
a light source device, comprising a plurality of monochromatic light sources, wherein the plurality of monochromatic light sources comprise blue light sources; and
a blue light selective filtration device, arranged at a light output side of the blue light sources and configured to filter blue light selectively.

10. The field sequential display according to claim 9, wherein the blue light selective filtration device is configured to filter blue light with wavelength close to ultraviolet wavelength.

11. The field sequential display according to claim 10, wherein the blue light selective filtration device is configured as a narrow-band light filtration cover allowing blue light with wavelength greater than or equal to 440nm to pass through.
